# EUROPÄISCHE PATENTSCHRIFT

(11) **EP 3 311 712 B1**
(45) Veröffentlichungstag und Bekanntmachung des Hinweises auf die Patenterteilung: **19.12.2018**
(21) Anmeldenummer: 17204879.5
(22) Anmeldetag: 29.01.2016
(51) Int. Cl.: A47J 27/00, G01F 23/296

(54) **KÜCHENGERÄT**
KITCHEN APPLIANCE
APPAREIL DE CUISINE

(30) Priorität: 29.01.2015 DE 102015101299
(43) Veröffentlichungstag der Anmeldung: 25.04.2018
(62) Teilanmeldung aus: 16704550.9
(73) Patentinhaber: Vorwerk & Co. Interholding GmbH, 42275 Wuppertal (DE)
(72) Erfinder: Cornelißen, Markus, 53332 Bornheim (DE); Lang, Torsten, 42657 Solingen (DE)
(74) Vertreter: Müller, Enno

(56) Entgegenhaltungen:
- EP-A1- 2 452 599
- US-A1- 2004 112 225

## Beschreibung

Die Erfindung betrifft ein mit einer Elektroversorgung versehenes Küchengerät mit einem Topf zur Aufnahme von mit dem Küchengerät zu verarbeitendem Nahrungsmittel.

Küchengeräte, die einen Topf zur Aufnahme von mit dem elektrischen Küchengerät zu verarbeitenden Nahrungsmitteln, sowie häufig auch einen Deckel zum Verschließen des Topfes aufweisen, sind aus der Praxis gut bekannt. Exemplarisch sei auf Dampfkochtöpfe sowie auf multifunktionale Küchenmaschinen verwiesen. Letztere sind in der Regel mit einem derartigen Topf versehen, der die Aufnahme von Nahrungsmitteln ermöglicht, damit diese darin auf verschiedene Weisen verarbeitet werden können. Eine derartige Verarbeitung der Nahrungsmittel kann z.B. in einem Zerkleinern, Verrühren oder Verkneten bestehen. Darüber hinaus sind derartige Töpfe von Küchenmaschinen bekannt, die zusätzliche Funktionen bereitstellen, wie ein Wiegen der darin enthaltenen Nahrungsmittel und/oder ein Erhitzen.

Beim Einfüllen des Nahrungsmittels in einen derartigen Topf ist es häufig von hoher Wichtigkeit, ein Überbefüllen des Topfes zu vermeiden. Ist der Topf nämlich mit einem Nahrungsmittel, wie einer Flüssigkeit, über ein vorbestimmtes Maß hinaus befüllt, so kann die Gefahr bestehen, dass bei der Verarbeitung des Nahrungsmittels, z.B. während eines Mixvorgangs, Nahrungsmittel aus dem Topf austritt. Dem kann vorgebeugt werden, indem das elektrische Küchengerät mit einer Füllstandsbestimmungseinrichtung zur Bestimmung des Füllstands des Nahrungsmittels in dem Topf versehen wird. Dabei muss die Füllstandsbestimmungseinrichtung regelmäßig keine quantitative Messung des Füllstands des Nahrungsmittels im Topf ermöglichen. Vielmehr ist es im Allgemeinen ausreichend, wenn die Füllstandsbestimmungseinrichtung erfasst, ob die Füllhöhe des Nahrungsmittels im Topf tatsächlich unterhalb einer maximal zulässigen höchsten Füllstandshöhe liegt.

Aus der US 2004/0112225 A1 ist ein Kochgefäß mit zwei Temperatursensoren bekannt. Die Auswertung der Temperatursensoren wird dazu genutzt, die Heizung außer Betrieb zu setzen, wenn eine Differenz zwischen den von beiden Sensoren gemessenen Temperaturen größer oder gleich einer vorbestimmten Temperaturdifferenz ist.

Des Weiteren ist aus der US 2010/0058856 A1 ist eine becherförmige Messeinrichtung bekannt, bei welcher die Messeinrichtung einen Ultraschallsensor aufweist, der am oberen Becherrand vorragend in das Innere des Bechers angeordnet ist. Aus der GB 2 076 536 A ist eine Vorrichtung zur Erfassung eines Flüssigkeitsstandes bekannt, bei welcher rückwärtig zu einer Gefäßwandung Ultraschallsender und -empfänger angeordnet sind, wobei die Schallausbreitung innerhalb der Wandung des Gefäßes für die Bestimmung des Flüssigkeitsspiegels wesentlich ist. Die US 2010/0000315 A1 zeigt eine in einem Deckel integrierte elektrooptische Einrichtung zur Erfassung eines Flüssigkeitsspiegels in einem Behältnis. Die JP 11113738 A beschreibt zur Erfassung eines Wasserspiegels beim Reiskochen eine in eine Handhabe eines Gefäßes integrierte Messeinrichtung auf Basis eines Ultraschallsensors. Die FR 2 617 965 A1 beschreibt zur Erfassung einer Flüssigkeit in einem Gefäß einen durch eine Öffnung in der Wandung des Gefäßes hindurchragenden Sensor zur Anregung und Erfassung elastischer Wellen.

Ausgehend von dem zunächst genannten Stand der Technik beschäftigt sich die Erfindung mit der Aufgabe, eine Füllstandsbestimmung in einem Topf eines mit
einer Elektroversorgung versehenen Küchengerätes einfach und verlässlich vorzusehen.

Diese Aufgabe ist beim Gegenstand des Anspruches 1 gelöst, wobei darauf abgestellt ist, dass an der Wand des Topfes ein Heizelement angeordnet ist, dass eine Heizüberwachungseinrichtung vorgesehen ist, mit der das Heizverhalten des Heizelementes überwachbar und von der ein vom Heizverhalten des Heizelementes abhängiges Heizsignal ausgebbar ist, sowie eine Füllstandsprüfeinrichtung vorgesehen ist, der das Heizsignal zuführbar ist und von der in Abhängigkeit vom Heizsignal eine Füllstandsprüfung eines in den Topf eingebrachten Nahrungsmittels hinsichtlich eines Füllstandes oberhalb oder unterhalb einer maximal zulässigen Füllhöhe durchführbar ist.

Es ist ein maßgeblicher Aspekt einer Ausgestaltung der Erfindung, dass das Heizverhalten des Heizelementes überwachbar ist, so dass ein vom Heizverhalten des Heizelementes abhängiges Heizsignal hinsichtlich einer Füllstandsbestimmung ausgewertet werden kann. Das diesem Aspekt der Erfindung zugrundeliegende Prinzip liegt also darin, dass bei konstanter Ansteuerung zur Heizung des Heizelementes die Erwärmung des Heizelementes davon abhängig ist, in welchem Maß es Wärme an ein in den Topf eingebrachtes Nahrungsmittel abgeben kann. Je höher der Füllstand des Nahrungsmittels im Topf ist, umso mehr Wärme kann an das Nahrungsmittel abgegeben werden, so dass es zu einer entsprechend geringeren Erwärmung des Heizelementes selbst kommt. Dieses Heizverhalten, also das Maß des Erwärmens des Heizelementes, kann von der Heizüberwachungseinrichtung ermittelt werden, wobei diese ein entsprechendes Heizsignal an die Füllstandsprüfeinrichtung abgibt, die abhängig von diesem Heizsignal prüfen kann, ob der Füllstand des Nahrungsmittels in dem Topf oberhalb oder unterhalb einer maximal zulässigen Füllhöhe liegt.

Grundsätzlich ist als Heizüberwachungseinrichtung jede Einrichtung geeignet, mit der die Erwärmung, also das Heizverhalten des Heizelementes, erfassbar ist. Gemäß einer bevorzugten Weiterbildung der Erfindung ist als Heizüberwachungseinrichtung jedoch ein Thermoelement oder/und ein elektrischer Widerstandsmesser vorgesehen. Mit dem Thermoelement kann auf direkte Weise die Temperatur des Heizelementes erfasst werden. Ein elektrischer Widerstandsmesser kann die Temperatur des Heizelementes über das Prinzip erfassen, dass der elektrische Widerstand des Heizelementes mit steigender Temperatur des Heizelementes steigt. Eine entsprechende Eichung vorausgesetzt, können also mit dem Thermoelement bzw. mit dem elektrischen Widerstandsmesser die jeweilige Temperatur des Heizelementes erfasst werden so dass mittels der Füllstandsprüfeinrichtung eine zulässige bzw. eine zu hohe Befüllung des Topfes mit den Nahrungsmitteln erfassbar ist.

Das Heizelement kann an oder auf der Wand des Topfes vorgesehen sein. Gemäß einer bevorzugten Weiterbildung der Erfindung ist das Heizelement jedoch in die Wand des Topfes integriert. Dies hat insbesondere auch hygienische Vorteile, da auf diese Weise die Wand des Topfes glatt ausgebildet werden kann, was eine Reinigung erleichtert.

Nachfolgend werden zur Erläuterung der Erfindung unter Bezugnahme auf die Zeichnung verschiedene Ausführungsbeispiele näher beschrieben. In der Zeichnung zeigt
- Fig. 1: schematisch ein elektrisches Küchengerät gemäß einem ersten Ausführungsbeispiel mit einem Ultraschallsender und einem Ultraschallempfänger zur Füllstandsbestimmung (kein Ausführungsbeispiel gemäß der Erfindung); und
- Fig. 2: schematisch ein elektrisches Küchengerät gemäß einem zweiten Ausführungsbeispiel gemäß der Erfindung mit einem streifenförmigen Heizelement zur Füllstandsbestimmung.

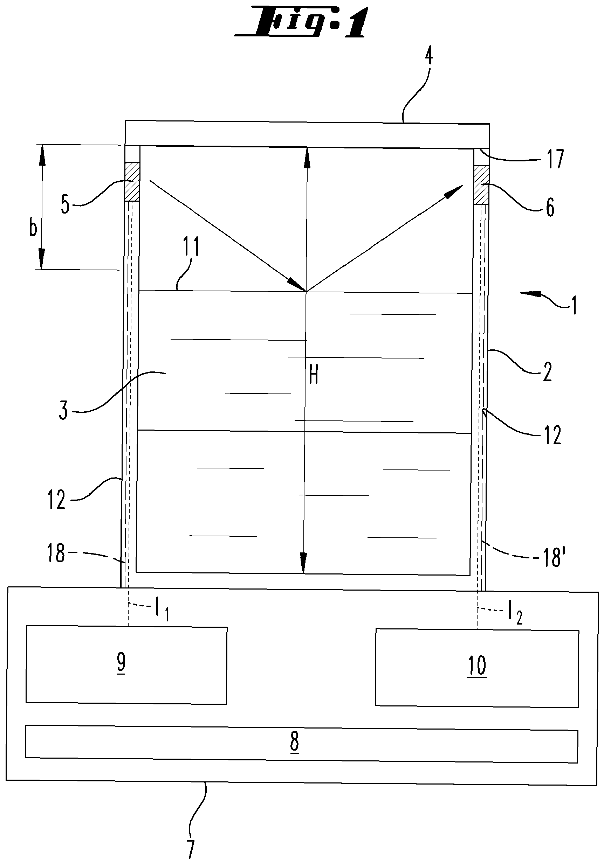

Aus Figur 1 ist schematisch ein elektrisches Küchengerät 1 mit einem Topf 2 zur Aufnahme eines mit dem elektrischen Küchengerät 1 zu verarbeitenden Nahrungsmittels 3 ersichtlich. Zum Verschließen des Topfes 2 dient ein Deckel 4. Zur Bestimmung des Füllstands des in dem Topf 2 befindlichen Nahrungsmittels 3, vorliegend einer Flüssigkeit, sind ein Ultraschallsender 5 sowie ein Ultraschallempfänger 6 vorgesehen. Der Ultraschallsender 5 und der Ultraschallempfänger 6 sind dazu am oberen Rand des Topfes 2 angebracht, und zwar dort in die Wand 12 des Topfes 2 integriert. Auf diese Weise wird auch im Inneren des Topfes 2 eine glatte Fläche bereitgestellt, was aus hygienischen Gründen vorteilhaft ist und insbesondere eine einfache Reinigung des Topfes 2 erlaubt.

Der Topf kann ein Metalltopf sein. Der Topf kann aus einem Stahlwerkstoff bestehen. Er kann beispielsweise im Tiefziehverfahren hergestellt sein. Der Topf kann auch aus mehreren Materialien bestehen, insbesondere einen metallischen Teil und einen Kunststoffteil aufweisen. Das Kunststoffteil kann außenseitig zu dem Metallteil angebracht sein. Das Kunststoffteil kann über einen Teil des Umfangs des Topfes oder auch vollständig umfassend zu dem Topf vorgesehen sein. In letzterem Fall kann allerdings über die Höhe des Topfes nur über einen Teil der Höhe die Umfassung ausgebildet sein. Auch beispielsweise über einen Zwischenbereich der Höhe, so dass der Fußbereich des Topfes und der Randbereich keine umfassende (in Umfangsrichtung) Kunststoffumfassung aufweisen. Das Kunststoffteil kann beispielsweise auch einen Topfgriff ausbildet. Die Anordnung des Ultraschall-Sender 5 und/ oder des Ultraschall-Empfängers 6 innerhalb der Topfwandung kann auch bedeuten, dass diese Teile zumindest teilweise, gegebenenfalls aber auch vollständig, in einem Kunststoffteil des Topfes aufgenommen sind.

Am oberen Rand des Topfes 2 bedeutet bevorzugt, dass sie bezüglich einer freien Innenhöhe H des Topfes in einem Bereich b ausgehend von einem Topfrand 17 angeordnet sind, der ein Drittel oder weniger, bspw. bis hin zu 1/100, der freien Innenhöhe H beträgt. Hiermit sind auch alle Zwischenwerte, insbesondere in 1/100-Schritten, also in einem Bereich b, der 0,32 bis zu dem Topfrand selbst oder 1/100 oder mehr entfernt von dem Topfrand, entspricht. Auch diese Bereichsgrenze - ausgehend von dem Topfrand in Richtung zum Boden des Topfes - kann in 1/100-Schritten variiert sein. Insbesondere ist auch ein Bereich abgedeckt, der einem Viertel der Innenhöhe H, einem Achtel oder einem Sechzehntel der Innenhöhe H, als Bereich b, entspricht.

Der Topf 2 des elektrischen Küchengeräts 1 ist gemäß dem aus Figur 1 ersichtlichen bevorzugten Ausführungsbeispiel der Erfindung auf einer Basis 7 des Küchengeräts angebracht. In dieser Basis 7 sind neben einer zentralen Steuereinrichtung 8 zur allgemeinen Steuerung des elektrischen Küchengeräts 1 eine Ultraschallsteuerung 9 sowie eine Ultraschallauswerteeinrichtung 10 vorgesehen. Wie mit gestrichelten Linien 11,12 angedeutet, ist die Ultraschallsteuerung 9 mit dem Ultraschallsender 5 verbunden, und die Ultraschallauswerteeinrichtung 10 ist mit dem Ultraschallempfänger 6 verbunden. Die Linien 11 und 12 können lediglich Signalleitungen bedeuten. Es kann darüber hinaus auch noch eine Leitung 18,18' zur Energieversorgung des Ultraschallsensors und/ oder des Ultraschallempfängers vorgesehen sein.

Die Funktionsweise des elektrischen Küchengeräts 1 gemäß dem vorliegend beschriebenen Ausführungsbeispiel ist nun wie folgt:
Mit der Ultraschallsteuerung 9 wird der Ultraschallsender 5 derart angesteuert, dass dieser, wie mit einem schräg nach unten weisenden Pfeil angedeutet, ein Ultraschallsignal nach unten hin zur Oberfläche 11 des Nahrungsmittels 3 im Topf 2 aussendet. Dort erfolgt eine teilweise Reflexion des Ultraschallsignals, so dass ein reflektierter Anteil des Ultraschallsignals wieder schräg nach oben läuft und dort auf den Ultraschallempfänger 6 trifft. Das von dem Ultraschallempfänger 6 empfangene Signal wird dann an die Ultraschallauswerteeinrichtung 10 übermittelt, die ihrerseits aus der Laufzeit des Ultraschallsignals vom Ultraschallsender 5 zum Ultraschallempfänger 6 den Füllstand des Nahrungsmittels 3 im Topf 2 bestimmen kann. Nur wenn der dadurch bestimmte Füllstand unterhalb eines vorbestimmten maximalen Füllstands liegt, und damit keine Überbefüllung des Topfes 2 vorliegt, lässt sich das elektrische Küchengerät 1 anschalten. Die entsprechende Funktionalität ist in der zentralen Steuereinheit 8 verwirklicht.

Aufgrund der Anordnung von Ultraschallsender 5 und Ultraschallempfänger 6 am oberen Rand des Topfes 2 ist es unerheblich, ob der Deckel 4 am elektrischen Küchengerät 1 angebracht ist bzw. wie der Deckel 4 auf dem Topf 2 aufgesetzt ist. Da der Topf 2 gemäß dem vorliegend beschriebenen bevorzugten Ausführungsbeispiel der Erfindung von dem Topf 2 vollständig abnehmbar ist, ist dies von großem Vorteil, da die Füllstandsbestimmung des Nahrungsmittels 3 in dem Topf 2 völlig unabhängig von dem Deckel 4 ist und damit auch dann funktioniert, wenn der Deckel 4 gar nicht am Topf 2 angebracht ist.

Neben der Funktionalität des Ultraschallsenders 5 zum Aussenden eines Ultraschallsignals auf die Oberfläche 11 des Nahrungsmittels 3 im Topf 2 ist mittels der Ultraschallsteuerung 9 auch eine derartige Ansteuerung des Ultraschallsenders 5 möglich, dass gleichzeitig zur Füllstandsbestimmung eine Reinigung des Topfes 2 erfolgt. Dazu ist eine Ansteuerung des Ultraschallsenders 5 mit einer passenden Frequenz und einer hinreichend großen Amplitude erforderlich, um die Wand 12 des Topfes 2 zu derartigen Schwingungen anzuregen, die ein Ablösen von dort festsitzenden Verschmutzungen ermöglicht. Ein derartiger Reinigungsvorgang nimmt damit keine zusätzliche Zeit in Anspruch, da er gleichzeitig zur Erfassung des Füllstands des Nahrungsmittels 3 im Topf 2 erfolgen kann.

Üblicherweise werden insbesondere zur Ultraschall-Reinigung Frequenzen von 20 bis 400 kHz eingesetzt. Bevorzugt sind Frequenzen im Bereich von 20 bis 50 kHz. Auch höhere Frequenzen sind aber für eine Reinigung, insbesondere in Bezug auf vergleichsweise kleine Partikel, günstig. So werden etwa Frequenzen im Bereich von 200 kHz, also etwa 180 bis 220 kHz, für eine Reinigung im Hinblick im Hinblick auf Partikel mit einem Durchmesser größer 1 µm eingesetzt. Zur Ablösung von Partikeln noch kleineren Durchmessers kann die oben angegebene Bandbreite auch noch weiter nach oben bis hin zu 2 MHz erweitert sein.

Hinsichtlich der Schallleistung ist 50 Watt oder mehr, bis hin zu beispielsweise 2.400 Watt bevorzugt. Jedenfalls dann, wenn es sich um eine Reinigungsanwendung handelt.

Bei einer Füllstandsmessung kann auch mit geringeren, auch wesentlich geringeren Leistungen, gearbeitet werden. Etwa im Bereich von 0,5 - 5 Watt. Allerdings ist bei einer Füllstandsmessung bevorzugt eine höhere Frequenz genutzt. Beispielsweise im Bereich von 350 - 450 kHz, bevorzugt bei 370 - 390 kHz und weiter bevorzugt bei 380 kHz.

Es ist aber auch eine Füllstandserkennung möglich bei einer Reinigungsanwendung, und mit den insofern beschriebenen Frequenzen und Leistungen, wozu hierdurch erzeugte Schwingungen des Topfes im Hinblick auf ein Ausschwingverhalten, also beispielsweise wie schnell nach Beendigung der Beaufschlagung durch Ultraschall eine bestimmte vorgegebene Schwingung des Topfes, die zuvor durch die Beaufschlagung mit Ultraschall angeregt war, unterschritten wird, als Rückschluss auf die Masse, die sich im Topf befindet, gewertet wird.

Im Hinblick auf das Reinigungsverhalten und auch beispielsweise die zuletzt beschriebene Möglichkeit der Füllstandsmessung, reicht es auch aus, wenn ein Ultraschallsender und ein Ultraschallempfänger lediglich an dem metallischen Teil eines Topfes angekoppelt sind. Sie brauchen sich nicht im Inneren der Wandung zu befinden. Sie können also im Topfäußeren insoweit angeordnet sein. Gegebenenfalls aber auch eingebettet und umgeben von einem Kunststoffteil oder einem sonstigen Schutzteil.

Im Hinblick auf eine Füllstandsmessung mit in das Topfinnere abstrahlendem Ultraschallsender ist bevorzugt, dass die Strahlrichtung des Ultraschalls bezogen auf eine Horizontale bei üblicher Nutzung des Topfes in einem nach unten gerichteten Winkel mit der Horizontalen einen solchen Winkel von etwa 30 - 70 Grad, bevorzugt 40 - 60 Grad und weiter bevorzugt etwa 50 Grad einschließt.

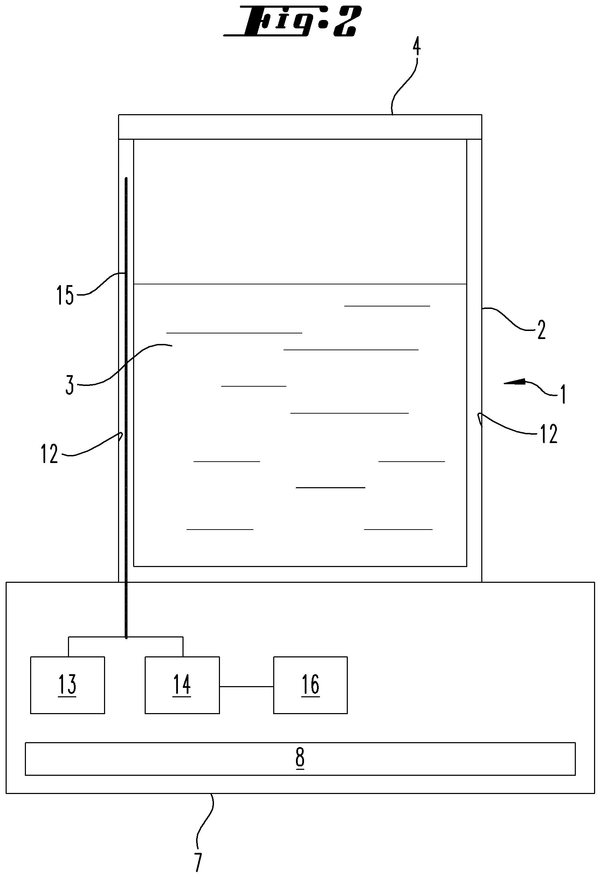

Aus Figur 2 ist ein elektrisches Küchengerät 1 gemäß einem zweiten Ausführungsbeispiel gemäß der Erfindung ersichtlich. Anstatt mittels eines Ultraschallsignals erfolgt hier eine Füllstandsbestimmung des Nahrungsmittels 3 im Topf 2 mittels eines streifenförmigen Heizelementes 15, das bevorzugt in die Wand 12 des Topfes 2 integriert ist. Dieses Heizelement 15 wird angesteuert und damit beheizt von einer Heizungssteuerung 13, die in der Basis 7 des elektrischen Küchengeräts 1 vorgesehen ist. Das Heizelement 15 ist darüber hinaus mit einer Heizüberwachungseinrichtung 14 verbunden, mit der das Heizverhalten des Heizelements 15 erfassbar ist. Ein vom Heizverhalten des Heizelements 15 abhängiges Heizsignal wird dann von der Heizüberwachungseinrichtung 14 an eine Füllstandsprüfeinrichtung 16 ausgegeben, mit der der Füllstand des Nahrungsmittels 3 im Topf 2 prüfbar ist.

Das Prinzip der Füllstandsmessung besteht darin, dass bei konstanter Ansteuerung zur Heizung des Heizelementes 15 dessen Erwärmung davon abhängt, wieviel Wärme an das Nahrungsmittel 3 in dem Topf 2 abgegeben werden kann. Je höher der Füllstand des Nahrungsmittels 3 im Topf 2 ist, umso größer ist also das Volumen des Nahrungsmittels 3 und damit auch die Wärmekapazität des Nahrungsmittels 3, so dass entsprechend mehr Wärme an das Nahrungsmittel 3 abgegeben werden kann. Damit kommt es zu einer entsprechend geringeren Erwärmung des Heizelementes 15.

Dieses Heizverhalten, also das Maß des Erwärmens des Heizelementes 15, wird von der Heizüberwachungseinrichtung 14 ermittelt, wobei diese ein entsprechendes Heizsignal an die Füllstandsprüfeinrichtung 16 abgibt, die abhängig von diesem Heizsignal prüft, ob der Füllstand des Nahrungsmittels 3 in dem Topf 2 oberhalb oder unterhalb einer maximal zulässigen Füllhöhe liegt, die einen regulären und sicheren Betrieb des elektrischen Küchengeräts 1 ermöglicht.

Als Heizüberwachungseinrichtung 14 ist vorliegend ein elektrischer Widerstandsmesser vorgesehen. Mit diesem elektrischen Widerstandsmesser wird die Temperatur des Heizelementes 15 über das Prinzip erfasst, dass der elektrische Widerstand des Heizelementes 15 mit steigender Temperatur des Heizelementes 15 steigt. Nach einer entsprechenden Eichung wird also mit dem elektrischen Widerstandsmesser die Temperatur des Heizelementes 15 erfasst, so dass basierend darauf mittels der Füllstandsprüfeinrichtung 16 eine zulässige bzw. eine zu hohe Befüllung des Topfes 2 mit dem Nahrungsmittel 3 erfasst werden kann.

**Bezugszeichenliste:**

| | | | |
|---|---|---|---|
| 1 | Elektrisches Küchengerät | | |
| 2 | Topf | b | Bereich |
| 3 | Nahrungsmittel | 11 | Linie |
| 4 | Deckel | 12 | Linie |
| 5 | Ultraschallsender | | |
| 6 | Ultraschallempfänger | H | Innenhöhe |
| 7 | Basis | | |
| 8 | Zentrale Steuereinheit | | |
| 9 | Ultraschallsteuerung | | |
| 10 | Ultraschallauswerteeinrichtung | | |
| 11 | Oberfläche | | |
| 12 | Wand des Topfes | | |
| 13 | Heizungssteuerung | | |
| 14 | Heizüberwachungseinrichtung | | |
| 15 | Heizelement | | |
| 16 | Füllstandsprüfeinrichtung | | |
| 17 | Topfrand | | |
| 18 | Leitung | | |
| 18' | Leitung | | |

## Patentansprüche

1. Mit einer Elektroversorgung versehenes Küchengerät (1) mit einem Topf (2) zur Aufnahme von mit dem Küchengerät (1) zu verarbeitenden Nahrungsmitteln (3), **dadurch gekennzeichnet, dass** an der Wand (12) des Topfes (2) ein Heizelement (15) angeordnet ist, dass eine Heizüberwachungseinrichtung (14) vorgesehen ist, mit der das Heizverhalten des Heizelementes (15) überwachbar und von der ein vom Heizverhalten des Heizelementes (15) abhängiges Heizsignal ausgebbar ist, sowie eine Füllstandsprüfeinrichtung (16) vorgesehen ist, der das Heizsignal zuführbar ist und von der in Abhängigkeit vom Heizsignal eine Füllstandsprüfung eines in den Topf (2) eingebrachten Nahrungsmittels (3) hinsichtlich eines Füllstandes oberhalb oder unterhalb einer maximal zulässigen Füllhöhe durchführbar ist.

2. Elektrisches Küchengerät nach Anspruch 1, **dadurch gekennzeichnet, dass** die Heizüberwachungseinrichtung (14) ein Thermoelement oder/und einen elektrischen Widerstandsmesser aufweist.

3. Elektrisches Küchengerät nach einem der vorhergehenden Ansprüche, **dadurch gekennzeichnet, dass** das Heizelement (15) in die Wand (12) des Topfes (2) integriert ist.

4. Elektrisches Küchengerät nach einem der vorhergehenden Ansprüche, **dadurch gekennzeichnet, dass** das Heizelement (15) streifenförmig ist.

## Claims

1. Kitchen appliance (1) fitted with an electricity supply and comprising a pot (2) for receiving food (3) to be processed using the kitchen appliance (1), **characterised in that** a heating element (15) is arranged on the wall (12) of the pot (2), and **in that** a heat monitoring device (14) is provided by means of which the heating behaviour of the heating element (15) can be monitored and which can display a heat signal that is dependent on the heating behaviour of the heating element (15), and a fill level checking device (16) is provided to which the heat signal can be delivered and which can carry out, depending on the heat signal, a fill level check of food (3) introduced into the pot (2) with regard to a fill level above or below a maximum permissible fill height.

2. Electrical kitchen appliance according to claim 1, **characterised in that** the heat monitoring device (14) has a thermocouple and/or an electrical resistance meter.

3. Electrical kitchen appliance according to either of the preceding claims, **characterised in that** the heating element (15) is integrated into the wall (12) of the pot (2).

4. Electrical kitchen appliance according to any of the preceding claims, **characterised in that** the heating element (15) is in the form of a strip.

## Revendications

1. Appareil de cuisine (1) ayant une alimentation électrique et comprenant un récipient (2) pour recevoir des aliments (3) à traiter avec l'appareil de cuisine (1), **caractérisé en ce qu'**un élément chauffant (15) est agencé sur la paroi (12) du récipient (2), **en ce qu'**il est prévu un dispositif de surveillance du chauffage (14) avec lequel peut être surveillé le comportement thermique de l'élément chauffant (15) et qui peut émettre un signal thermique dépendant du comportement thermique de l'élément chauffant (15), et un dispositif de contrôle du niveau de remplissage (16) auquel peut être fourni le signal thermique et qui peut effectuer, en fonction du signal thermique, un contrôle du niveau de remplissage d'un aliment (3) introduit dans le récipient (2) par rapport à un niveau de remplissage au-delà ou en deçà d'un niveau maximal admissible.

2. Appareil de cuisine électrique selon la revendication 1, **caractérisé en ce que** le dispositif de surveillance du chauffage (14) comprend un thermocouple et/ou un dispositif de mesure de résistance électrique.

3. Appareil de cuisine électrique selon l'une des revendications précédentes, **caractérisé en ce que** l'élément chauffant (15) est intégré dans la paroi (12) du récipient (2).

4. Appareil de cuisine électrique selon l'une des revendications précédentes, **caractérisé en ce que** l'élément chauffant (15) est en forme de bande(s).
